# EUROPEAN PATENT APPLICATION

(11) **EP 4 075 662 A1**
(43) Date of publication of application: **19.10.2022**
(21) Application number: 21168103.6
(22) Date of filing: 13.04.2021
(51) Int. Cl.: H02P 6/08, H02P 6/26, F04D 27/00, G06F 1/20

(54) **FAN CONTROL CIRCUIT**

(71) Applicant: Listan GmbH, 21509 Glinde (DE)
(72) Inventor: SABISZ, Marius, 21509 Glinde (DE); CHEN, Ping-Chi, 21509 Glinde (DE)
(74) Representative: 2K Patentanwälte Blasberg Kewitz & Reichel

(57) **Abstract**

A fan control circuit (20) is installed on a fan (10) and connected with a control source (60) which outputs a fan starting signal (61) to the fan control circuit (20) based on a load state. The fan control circuit (20) includes a switch (21) and a control module (22), the switch (21) is installed on the fan (10) and is directly operated to switch to one of a plurality of states, and the control module (22) is connected with the switch (21) and a motor coil (11) installed on the fan (10). The control module (22) outputs a driving signal (221) to the motor coil (11) based on the fan starting signal (61). The driving signal (221) and a rotating speed of the fan (10) define a rotating speed curve (222). A change of the states of the switch (21) changes a slope of the rotating speed curve (222) of the fan (10).

## Description

### FIELD OF THE INVENTION

The invention relates to a fan control circuit, in particular to a fan control circuit which changes the set voltage received by the control module to change the slope of the rotating speed curve when the state of the changeover switch changes after the control module outputs the driving signal based on the fan starting signal.

### BACKGROUND OF THE INVENTION

After the conventional fan is installed on the computer host or power supply, the fan is controlled by the computer host or power supply. When the load of host computer or power supply increases, the speed of control fan increases, and when the load of host computer or power supply decreases, the speed of control fan decreases. In other words, the conventional fan can't change the rotation speed autonomously, but can only rotate according to the control of the host computer or the power supply.

In addition, in order to better meet the needs of users, the fan is equipped with a control circuit and a changeover switch which can be operated by users, as described in patents such as CN 102954013A. After the fan defined in patents such as CN 102954013A is connected to a computer host or a power supply, the fan can still rotate at different speeds according to the state that the user operates the switch. More specifically, the previous patent selects the conducting resistance through the switch, so that the voltage value received by the control circuit on the fan can control the fan speed. However, the conventional control mechanism needs to change the control signal transmitted to the fan control circuit so that the fan can rotate based on the control signal after the switch has been operated. In addition, the conventional fan only rotates at a constant speed based on the fixed voltage value generated by the on-resistance, so that the conventional fan cannot provide a better user experience.

### SUMMARY OF THE INVENTION

The main purpose of the present invention is to solve the problem that the conventional control mechanism can only rotate at a single speed under the same voltage value.

In order to achieve the above objective, the present invention provides a fan control circuit, which is installed on a fan and receives a fan start signal from a control source. The fan control circuit comprises a switch and a control module, wherein the switch is installed on the fan and can be directly operated to switch to one of a plurality of states. The control module is connected with the switch and a motor coil installed on the fan; and the control module outputs a driving signal to the motor coil based on the fan start signal, which defines a rotation speed curve with the rotation speed of the fan.

In an embodiment, when the slope of the speed curve changes, the minimum speed remains unchanged.

In an embodiment, the fan control circuit has a voltage dividing circuit connected with the switch, which includes a plurality of resistors and a node installed between the resistors and connected with the control module. The change of the switch state changes the voltage dividing state of the voltage dividing circuit and changes the node voltage.

In an embodiment, the voltage dividing circuit can be implemented by a chip connected with the control module.

In an embodiment, the fan has a base for providing the motor coil, and the fan control circuit is installed on the base.

In an embodiment, the switch is exposed on the side of the base where the motor coil is not provided.

In an embodiment, the fan control circuit has a voltage dividing circuit connected with the switch, which includes a resistor, a variable resistor connected with the resistor, and a node installed between the resistor and the variable resistor and connected with the control module. The change of the switch state changes the voltage dividing state of the voltage dividing circuit and changes the node voltage.

Compared with the conventional method, the fan control circuit of the present invention has the following characteristics: The fan control circuit receives the fan starting signal from the control source, and makes the control module output the driving signal to control the motor coil after receiving the fan starting signal; and when the change switch changes state, the control module can change the received set voltage, thereby changing the slope of the rotating speed curve of the fan.

### BRIEF DESCRIPTION OF THE DRAWINGS

Fig.1, Schematic diagram of fan structure according to an embodiment of the present invention.
Fig.2, Unit schematic diagram of an embodiment of the present invention.
Fig.3, Schematic diagram of rotation speed curve of an embodiment of the present invention (I).
Fig.4, Schematic diagram of rotation speed curve of an embodiment of the present invention (II).
Fig.5, Schematic diagram of rotational speed curve of an embodiment of the present invention (III).
Fig.6, Schematic diagram of rotation speed curve of an embodiment of the present invention (IV).
Fig.7, Schematic diagram of rotation speed curve of an embodiment of the present invention (V).
Fig.8, Schematic diagram of rotational speed curve of an embodiment of the present invention (VI).
Fig.9, Schematic diagram of voltage dividing circuit according to an embodiment of the present invention (I).
Fig.10, Schematic diagram of voltage dividing circuit according to an embodiment of the present invention (II).
Fig.11, Schematic diagram of voltage dividing circuit according to an embodiment of the present invention (III).
Fig.12, Schematic diagram of voltage dividing circuit according to an embodiment of the present invention (IV).
Fig.13, Schematic diagram of voltage dividing circuit according to an embodiment of the present invention (V).
Fig.14, Schematic diagram of voltage dividing circuit according to an embodiment of the present invention (VI).
Fig.15, Schematic diagram of voltage dividing circuit according to an embodiment of the present invention (VII).

### DETAILED DESCRIPTION OF THE PREFERRED EMBODIMENTS

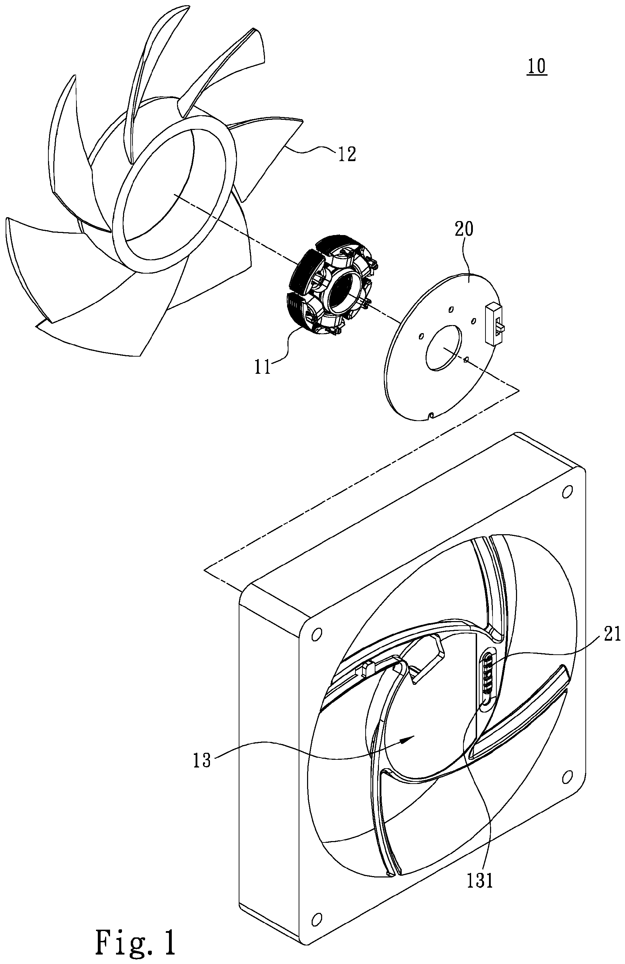

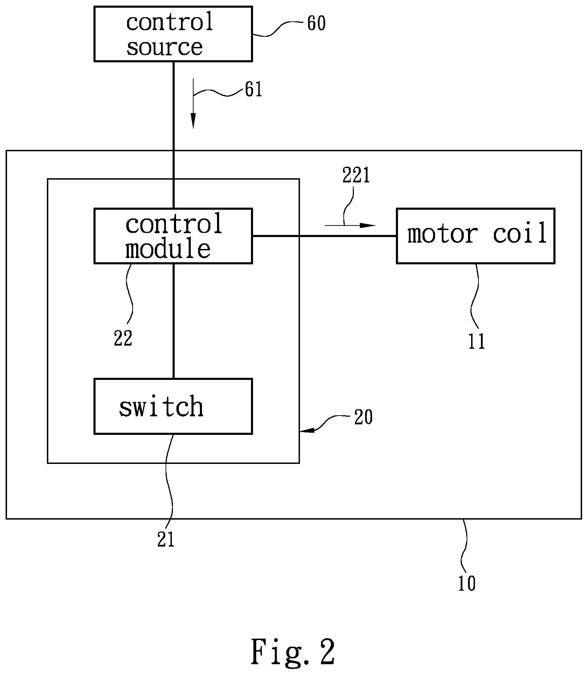

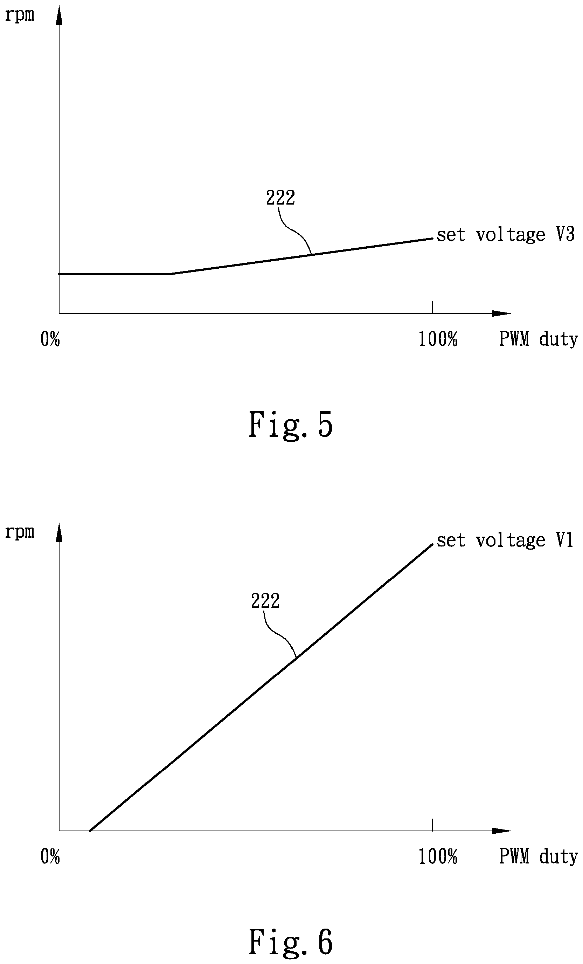

Detailed description and technical content of the present invention are described as follows with reference to the figures:
Referring to Fig.1 to 5, the present invention provides a fan control circuit 20, which is installed on a fan 10. In this paper, prior to explaining the fan control circuit 20, the structure of the fan 10 will be explained. As shown in Fig.1, the fan 10 includes a motor coil 11 connected to the fan control circuit 20 and a fan blade 12 controlled by the motor coil 11. The fan 10 is installed on a computer host or a power supply, which can be regarded as a control source 60. After the control source 60 is started, it outputs a fan starting signal 61 to the fan control circuit 20. In this paper, the fan starting signal 61 is actually a pulse-width modulation signal (Pulse-width Modulation signal) generated based on the load of the control source 60, and the fan control circuit 20 starts the motor coil 11 according to the fan starting signal 61.

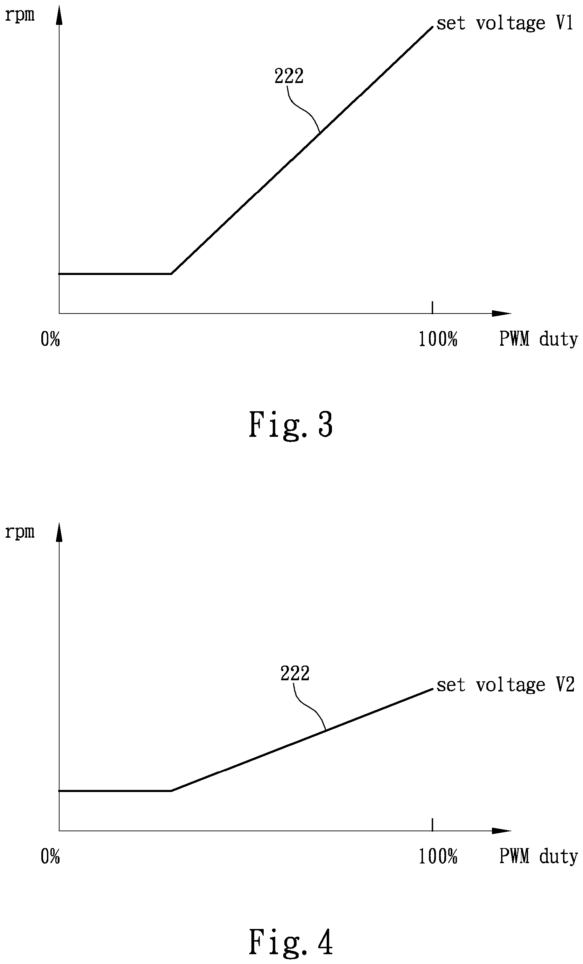

Further, the fan control circuit 20 includes a switch 21 installed on the fan 10 and a control module 22 connected to the switch 21. Specifically, the switch 21 and the control module 22 are installed on the same circuit board of the fan 10. The switch 21 is a physical switch and can be directly operated by the user. After being operated, the switch 21 switches to one of a plurality of states. For example, these states can refer to the position or state of the switch 21 after being operated. After being operated, the switch 21 provides the control module 22 with different conditions (such as setting voltage, etc.) based on the different position or state. The control module 22 is connected to the motor coil 11 and receives the fan starting signal 61 from the control source 60. Based on the fan starting signal 61, the control module 22 outputs a driving signal 221 to the motor coil 11, so that the motor coil 11 controls the speed of the fan 10 based on the driving signal 221, which defines a rotational speed curve 222 with the speed of the fan 10. In addition, since the voltage corresponding to the driving signal 221 is positively correlated with the load of the control source 60, the speed curves depicted in Fig. 3 to 5 in this paper take the load of the control source 60 as the horizontal axis. Moreover, the rotational speed curve 222 referred to in this paper can be a curve with non-zero curvature or a straight line with zero curvature. For the convenience of explaining this case, the rotational speed curve 222 will be temporarily described as a straight line with zero curvature.

With reference to Fig.1 to Fig.4, the control module 22 receives different set voltages on the assumption that the state of the switch 21 is different, and the set voltages are divided into a first set voltage and a second set voltage for convenience of explanation. At the beginning, the switch 21 makes the control module 22 receive the first set voltage, and makes the control module 22 control the speed of the fan 10. The driving signal 221 of the control module 22 and the speed of the fan 10 define the speed curve 222 as shown in Fig.3. In addition, when the state of the switch 21 changes, the control module 22 receives the second set voltage, and then the motor coil 11 changes the speed of the fan 10 based on the driving signal 221 currently output by the control module 22, so that the rotational speed curve 222 of the fan 10 changes from Fig.3 to Fig.4, that is, the slope of the rotational speed curve 222 changes.

Please refer to Fig.1 to Fig.5 again. Suppose that the switch 21 enables the control module 22 to receive the first set voltage, the second set voltage or a third set voltage. When the control module 22 receives the first set voltage, the rotational speed curve 222 of the fan 10 is as shown in Fig.3, and when the state of the switch 21 changes, the control module 22 changes from receiving the first set voltage to receiving the second set voltage instead. The control module 22 outputs the driving signal 221 to the motor coil 11 based on the fan starting signal 61, so that the rotational speed curve 222 of the fan 10 is changed from Fig.3 to Fig.4, and the slope of the rotational speed curve 222 is changed. In addition, when the state of the switch 21 changes again, the control module 22 receives the third set voltage instead of the second set voltage, and the control module 22 outputs the driving signal 221 to the motor coil 11 based on the fan starting signal 61, so that the rotational speed curve 222 of the fan 10 changes from Fig.4 to Fig.5. When this occurs, the slope of the rotational speed curve 222 changes again.

It can be seen from the above that the fan control circuit 20 of the present invention receives the fan starting signal 61 from the control source 60, and causes the control module 22 to output the driving signal 221 to control the motor coil 11 after receiving the fan starting signal 61. When the switch 21 changes state, the control module 22 can change the received set voltage, thereby changing the slope of the rotational speed curve 222 of the fan 10.

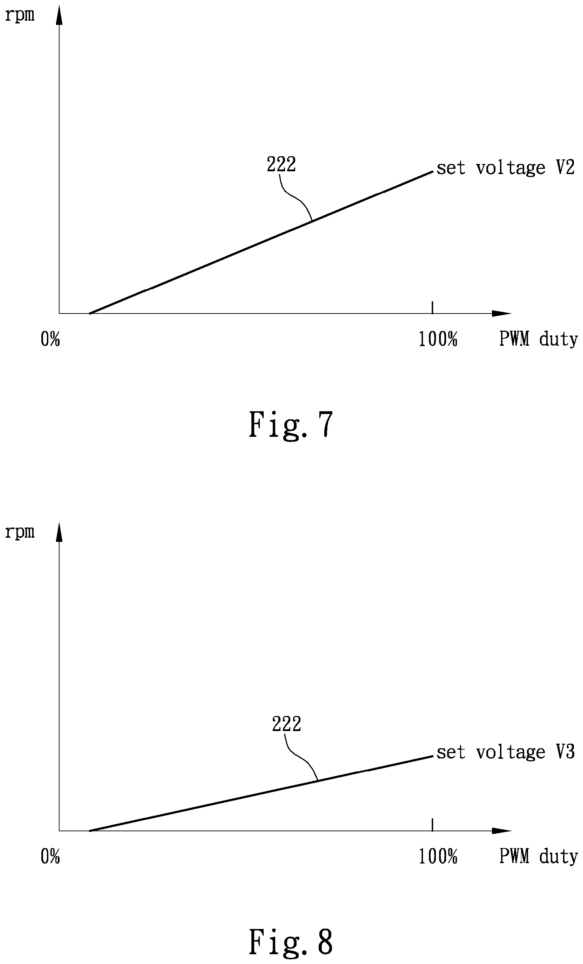

In an embodiment, please refer to Fig.3 to Fig.8 again. When the slope of the rotational speed curve 222 changes, the minimum speed of the rotational speed curve 222 remains unchanged, wherein the minimum speed of the rotational speed curve 222 is not limited to zero, that is to say, when the motor coil 11 is at the minimum speed of the rotational speed curve 222, the speed of the fan 10 can be minimized or stopped. In another embodiment, when the control module 22 judges that the load of the control source 60 is low, the control module 22 drives the fan 10 to maintain the lowest speed.

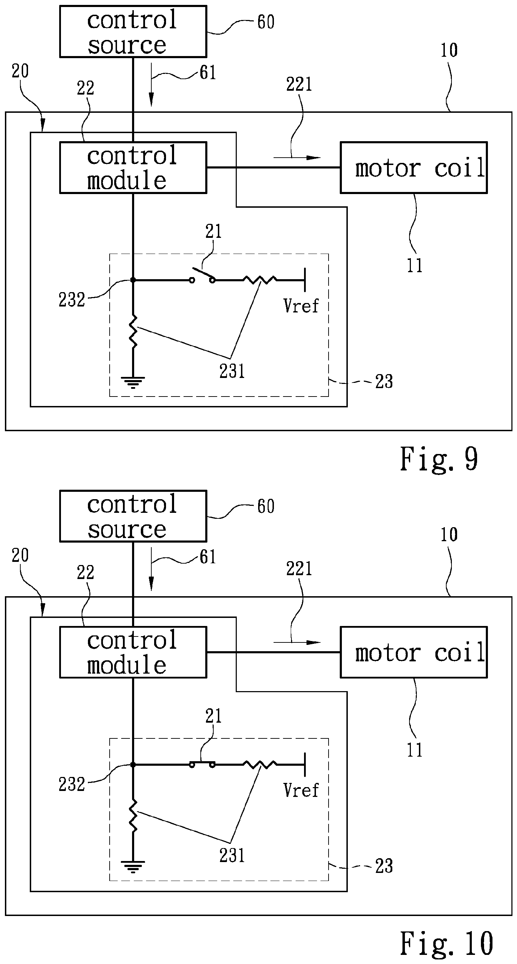

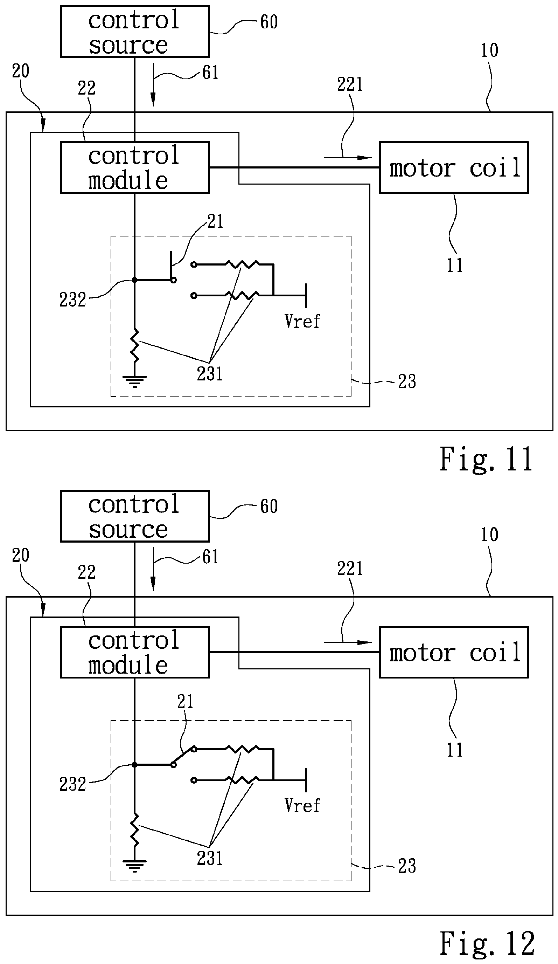

In an embodiment, please refer to Fig.9 and Fig.10. The fan control circuit 20 has a voltage dividing circuit 23 connected to the switch 21, which includes a plurality of resistors 231 and a node 232 installed between the resistors 231 and connected to the control module 22. The change of the switch 21 changes the voltage dividing state of the voltage dividing circuit 23 and the voltage of the node 232. To illustrate the implementation of the fan control circuit 20, one end of the voltage dividing circuit 23 is grounded, and the other end is connected with a reference voltage source (such as Vref.), and the voltage dividing circuit 23 has a branch. When the branch turns on or off the voltage dividing circuit 23, the voltage on the node 232 will vary, which makes the set voltage different. In another example, please refer to Fig.11 to Fig.13. The voltage dividing circuit 23 may further include two branches, and when the voltage dividing circuit 23 is turned on or turned off, the voltage on the node 232 will be different, thus making the set voltage different. In addition, this paper can actually include three branches, four branches, etc., and the number and setting positions of these resistors 231 shown in Fig.9 to Fig.13 are only examples and are not limited by this paper.

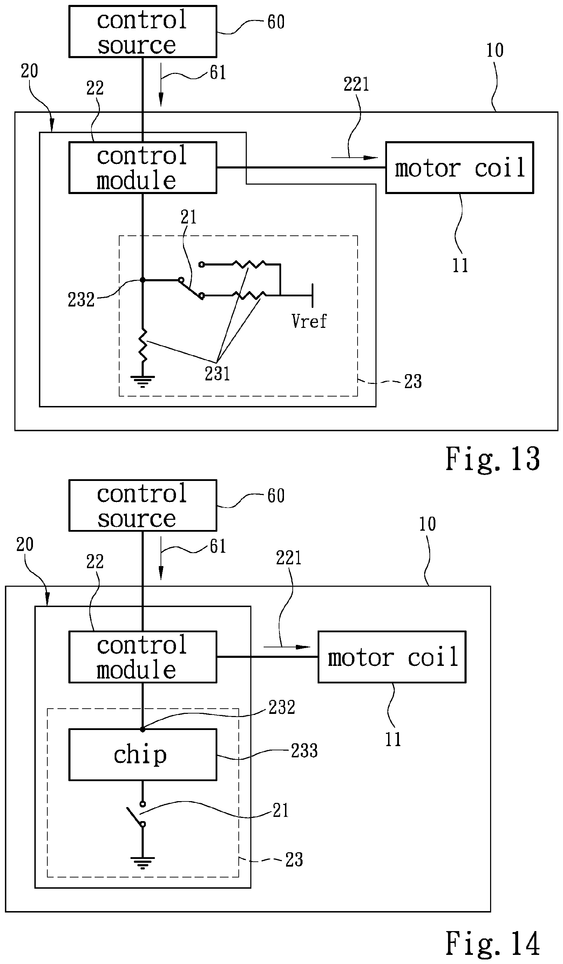

Furthermore, in another embodiment, please refer to Fig.14 again. The voltage dividing circuit 23 of the fan control circuit 20 is implemented with a chip 233 connected to the control module 22, and an output port of the chip 233 can be equivalent to the node 232 in the previous embodiment. In implementation, the switch 21 is connected to an input port of the chip 233, and the chip 233 generates a corresponding output based on the signal change provided by the switch 21. The output signal is sent to control module 22 via the output port.

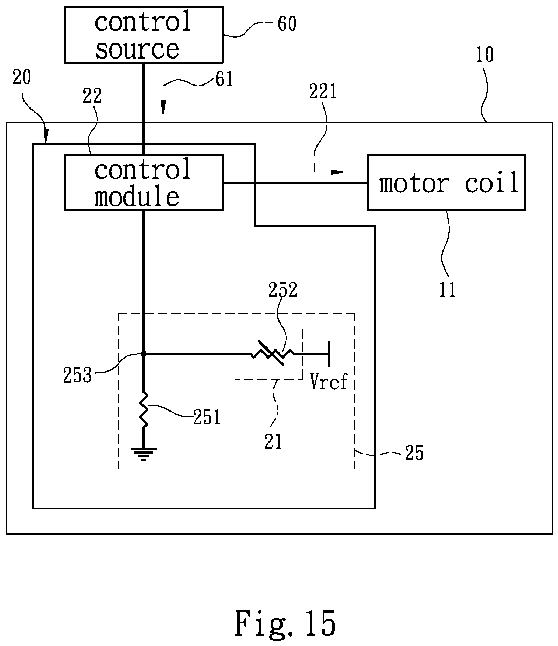

In addition, referring to Fig.15 again, in one embodiment, the fan control circuit 20 has a voltage dividing circuit 25 connected to the switch 21, which is implemented by a resistor 251, a variable resistor 252 connected to the resistor 251, and a node 253 installed between the resistor 251 and the variable resistor 252 and connected to the control module 22. For example, the resistor 251 is installed on the loop of the control module 22, and the variable resistor 252 is installed on the branch of the resistor 251 and connected to the reference voltage source (as shown at the reference Vref.). In addition, when the switch 21 changes state, the resistance value of the variable resistor 252 is changed, so that the voltage of the node 253 is different, and then different set voltages are generated. It is worth noting that the installed positions of the resistor 251 and the variable resistor 252 in the drawings of the present invention are not limited by the drawing contents, and the actual installed positions of the resistor 251 and the variable resistor 252 can be adjusted according to requirements.

On the other hand, please refer to Fig.1 again. In one embodiment, the fan 10 has a base 13 for providing the motor coil 11, and the fan control circuit 20 is installed on the side of the base 13 not facing the motor coil 11. In addition, the base 13 is formed with an opening 131, and the switch 21 is installed on the side of the base 13 where the motor coil 11 is not provided. After the assembly, the switch 21 is exposed out of the opening 131 for operation convenience.

## Claims

1. A fan control circuit (20), installed on a fan (10) and receiving a fan starting signal (61) from a control source (60), comprising:
a switch (21), installed on the fan (10) and directly operated to switch to one of a plurality of states; and
a control module (22), connected to the switch (21) and a motor coil (11) installed on the fan (10), the control module (22) outputting a driving signal (221) to the motor coil (11) based on the fan starting signal (61), wherein the driving signal (221) and a rotating speed of the fan (10) define a rotating speed curve (222), and a slope of the rotating speed curve (222) is changed with a change the plurality of states of the switch (21).

2. The fan control circuit (20) according to claim 1, wherein when the slope of the rotating speed curve changes (222), a minimum speed remains unchanged.

3. The fan control circuit (20) according to claim 1 or claim 2, wherein the fan control circuit (20) comprises a voltage dividing circuit (23) connected with the switch (21), and the voltage dividing circuit (23) comprises a plurality of resistors (231) and a node (232) installed between the plurality of resistors (231) and connected with the control module (22), and the change of the states of the switch (21) changes a voltage dividing state of the voltage dividing circuit (23) and changes a voltage of the node (253).

4. The fan control circuit (20) according to claim 3, wherein the voltage dividing circuit (23) is a chip (233) connected with the control module (22).

5. The fan control circuit (20) according to any of the claims 3 to 4, wherein the fan (10) comprises a base (13) for disposing the motor coil (11), and the fan control circuit (20) is installed on the base (13).

6. The fan control circuit (20) according to claim 5, wherein the switch (21) is exposed on a side of the base (13) where the motor coil (11) is not provided.

7. The fan control circuit (20) according to any of the claims 1 to 6, wherein the fan control circuit (20) comprises a voltage dividing circuit (25) connected with the switch (21), and the voltage dividing circuit (25) comprises a resistor (251), a variable resistor (252) connected with the resistor (251), and a node (232) installed between the resistor (251) and the variable resistor (252) and connected with the control module (22), and the change of the states of the switch (21) changes a voltage dividing state of the voltage dividing circuit (23) and changes a voltage of the node (232).

8. The fan control circuit (20) according to claim 7, wherein the fan (10) comprises a base (13) for disposing the motor coil (11), and the fan control circuit (20) is installed on the base (13).

9. The fan control circuit (20) according to claim 8, wherein the switch (21) is exposed on a side of the base (13) where the motor coil (11) is not provided.

## Amended claims

### Amended claims in accordance with Rule 137(2) EPC.

1. A fan control circuit (20), installed on a fan (10) and receiving a fan starting signal (61) from a control source (60), comprising:
a switch (21), installed on the fan (10) and directly operated to switch to one of a plurality of states; and
a control module (22), connected to the switch (21) and a motor coil (11) installed on the fan (10), the control module (22) configured to output a driving signal (221) to the motor coil (11) based on the fan starting signal (61), wherein the driving signal (221) and a rotating speed of the fan (10) define a rotating speed curve (222);
**characterized in that**
the control module (22) is configured to receive a set voltage which is changed based on the switch (21) and a reference voltage source (Vref) when the switch (21) is changed to other state, and configured to change a slope of the rotating speed curve (222) correspondingly, wherein a minimum speed of the fan (10) remains unchanged when the slope of the rotating speed curve (222) is changed.

2. The fan control circuit (20) according to claim 1, wherein the fan control circuit (20) comprises a voltage dividing circuit (23) connected with the switch (21), and the voltage dividing circuit (23) comprises a plurality of resistors (231) and a node (232) installed between the plurality of resistors (231) and connected with the control module (22), and the change of the states of the switch (21) changes a voltage dividing state of the voltage dividing circuit (23) and changes a voltage of the node (253).

3. The fan control circuit (20) according to claim 2, wherein the voltage dividing circuit (23) is a chip (233) connected with the control module (22).

4. The fan control circuit (20) according to claim 2, wherein the fan (10) comprises a base (13) for disposing the motor coil (11), and the fan control circuit (20) is installed on the base (13).

5. The fan control circuit (20) according to claim 4, wherein the switch (21) is exposed on a side of the base (13) where the motor coil (11) is not provided.

6. The fan control circuit (20) according to claim 1, wherein the fan control circuit (20) comprises a voltage dividing circuit (25) connected with the switch (21), and the voltage dividing circuit (25) comprises a resistor (251), a variable resistor (252) connected with the resistor (251), and a node (232) installed between the resistor (251) and the variable resistor (252) and connected with the control module (22), and the change of the states of the switch (21) changes a voltage dividing state of the voltage dividing circuit (23) and changes a voltage of the node (232).

7. The fan control circuit (20) according to claim 6, wherein the fan (10) comprises a base (13) for disposing the motor coil (11), and the fan control circuit (20) is installed on the base (13).

8. The fan control circuit (20) according to claim 7, wherein the switch (21) is exposed on a side of the base (13) where the motor coil (11) is not provided.
